# EUROPÄISCHE PATENTSCHRIFT

(11) **EP 1 676 988 B1**
(45) Veröffentlichungstag und Bekanntmachung des Hinweises auf die Patenterteilung: **18.04.2007**
(21) Anmeldenummer: 04030996.5
(22) Anmeldetag: 30.12.2004
(51) Int. Cl.: F01N 3/20

(54) **Dosierpumpenaggregat**
Dosing pump unit
Unité de pompe de dosage

(43) Veröffentlichungstag der Anmeldung: 05.07.2006
(73) Patentinhaber: Grundfos Management A/S, 8850 Bjerringbro (DK)
(72) Erfinder: Jochumsen, Hans Henrik, 3450 Allerod (DK); Frederiksen, Niels, 2720 Vanlose (DK); Lindberg, Karim, 3670 Vekso (DK); Madsen, Niels Torp, 3460 Birkerod (DK); Johansen, Tom, 25443 Helsingborg (SE)
(74) Vertreter: Hemmer, Arnd

(56) Entgegenhaltungen:
- EP-A- 1 435 458
- WO-A-02/101209
- DE-A1- 19 946 902
- DE-A1- 19 947 197
- US-A1- 2003 033 799
- US-B1- 6 273 120

## Beschreibung

Die Erfindung betrifft ein Dosierpumpenaggregat zum Zumischen eines flüssigen Reduktionsmittels in einem Abgasstrom.

Bei selbstzündenden Brennkraftmaschinen entstehen beim Betrieb mit Sauerstoffüberschuss, was in der Vielzahl der Betriebszustände der Fall ist, Stickoxyde, und zwar insbesondere bei Direkteinspritzung in den Hauptbrennraum, wie dies typischerweise bei Dieselmotoren der Fall ist. Um diese Stickoxyd-Emmissionen zu verringern, ist es bekannt, den Abgasstrom einen Reduktionskatalysator zuzuführen. Als Reduktionsmittel wird dabei üblicherweise eine wässrige Harnstofflösung dem Abgas vor Eintritt in den Katalysator fein verteilt zugeführt. Dabei ist die zugeführte Harnstoffmenge möglichst exakt auf den Verbrennungsprozess abzustimmen, um eine möglichst vollständige Reduktion innerhalb des Katalysators zu gewährleisten und andererseits einen Harnstoffüberschuss zu vermeiden.

Aus DE 199 46 902 A1 sowie WO 02/101209 A1 sind Vorrichtungen zum Dosieren eines Reduktionsmittels zum Entfernen von Stickoxiden aus Abgasen bekannt. Diese Systeme weisen eine Förderpumpe auf, welche das Reduktionsmittel aus einem Reduktionsmitteltank zu einer Mischkammer fördert, in welcher es mit Druckluft gemischt wird. Die Dosierung erfolgt dabei durch ein an der Mischkammer angeordnetes Magnetventil, welches die Reduktionsmittelzufuhr von der Förderpumpe öffnet oder schließt und auf diese Weise eine bestimmte Reduktionsmittelmenge in die Mischkammer eintreten lässt. Die Dosierung mittels eines Magnetventils führt zu einem komplizierteren Aufbau der Anlage, darüber hinaus ist die Anordnung eines Magnetventils an der Mischkammer problematisch, da bei Kristallisation von Reduktionsmittelresten in diesem Bereich die Funktion des Magnetventils blockiert werden kann.

Zur Dosierung und Zuführung des Reduktionsmittels zu dem Abgasstrom ist aus EP 1 435 458 A 1 ein spezielles Dosierpumpenaggregat bekannt. Bei diesem Dosierpumpenaggregat wird das zugeführte Reduktionsmittel im Dosierpumpenaggregat vor der Zuführung zu dem Abgasstrom mit Druckluft gemischt bzw. beaufschlagt. Um das System bei Inbetriebnahme zunächst entlüften zu können, ist bei dem bekannten Dosierpumpenaggregat vor einer Vormischeinrichtung, in welcher die Mischung des Reduktionsmittels mit Druckluft erfolgt, ein 3/2-Wegeventil als Vorspülventil angeordnet. Bei der Inbetriebnahme des Aggregates wird dieses Vorspülventil zunächst so geschaltet, dass die Dosierpumpe das angesaugte Reduktionsmittel zurück in den Reduktionsmitteltank fördert, bis die Leitungen vollständig mit Reduktionsmittel gefüllt sind. Dann wird das Vormischventil umgeschaltet, so dass das Reduktionsmittel der Vormischeinrichtung zugeführt wird.

Aufgabe der vorliegenden Erfindung ist es, den Aufbau des aus EP 1 435 458 A1 bekannten Dosierpumpenaggregates weiter zu vereinfachen.

Diese Aufgabe wird durch ein Dosierpumpenaggregat mit den im Anspruch 1 angegebenen Merkmalen gelöst. Bevorzugte Ausführungsformen ergeben sich aus den Unteransprüchen.

Die gewünschte Vereinfachung des Aufbaus des Dosierpumpenaggregates ergibt sich erfindungsgemäß durch folgenden Aufbau. Das Dosierpumpenaggregat zum Zumischen eines flüssigen Reduktionsmittels in einen Abgasstrom weist eine Dosierpumpe auf, welche eingangsseitig mit einem Anschluss zur Anbindung an einen Reduktionsmitteltank verbunden ist und ausgangsseitig mit einer Druckleitung sowie einer Rücklaufleitung zu dem Reduktionsmitteltank verbunden ist. Für die Saugleitung sowie die Rücklaufleitung zu dem Reduktionsmitteltank können an dem Dosierpumpenaggregat Anschlüsse vorgesehen sein, an welche Leitungen oder Schläuche angebunden werden, welche zu dem Reduktionsmitteltank führen. Die Druckleitung, welche sich in Strömungsrichtung hinter der Dosierpumpe erstreckt, ist Teil des Dosierpumpenaggregates und führt beispielsweise zu einer Vormischeinrichtung, in welcher das geförderte Reduktionsmittel mit Druckgas beaufschlagt wird. Die Rückflussleitung zweigt von der Druckleitung ab bzw. steht mit dieser in Verbindung. Erfindungsgemäß ist in der Druckleitung ein gegen den von der Dosierpumpe erzeugten Fluiddruck vorgespanntes Rückschlagventil angeordnet. Das bedeutet, die Vorspannung hält das Rückschlagventil gegen den von der Dosierpumpe erzeugten Fluiddruck geschlossen, solange der Fluiddruck nicht einen bestimmten Druckwert übersteigt, bei welchem die durch den Fluiddruck auf das Rückschlagventil wirkende Kraft der Vorspannkraft des Rückschlagventils entspricht. Überschreitet der Fluiddruck diesen Grenzwert, wird das Rückschlagventil gegen seine Vorspannung durch das geförderte Reduktionsmittel geöffnet. Die Rücklaufleitung ist in Strömungsrichtung des Reduktionsmittels vor dem Rückschlagventil mit der Druckleitung verbunden. Ferner ist in der Rücklaufleitung ein erstes Absperrventil zum wahlweisen Schließen der Rücklaufleitung angeordnet. Durch diese Anordnung kann auf ein aufwändiges 3/2-Wegeventil zum Entlüften bzw. Befüllen des Systems verzichtet werden, stattdessen ist ein einfaches Schalt- bzw. Absperrventil in der Rücklaufleitung vorgesehen.

Bei Inbetriebnahme des Dosierpumpenaggregats fördert die Dosierpumpe, beispielsweise eine Membranpumpe, zunächst Reduktionsmittel aus dem Reduktionsmitteltank und pumpt dieses durch die Rückflussleitung zurück in den Tank bis die Dosierpumpe und die Druckleitung vollständig mit Reduktionsmittel gefüllt sind. Da das vorgesehene Rückschlagventil vorgespannt ist, kann, solange der Fluiddruck des Reduktionsmittels den Druckwert zum Öffnen des Rückschlagventils nicht erreicht, sichergestellt werden, dass das Reduktionsmittel noch nicht weiter beispielsweise zu einer Vormischeinrichtung und insbesondere nicht in das Abgassystem des Verbrennungsmotors strömt, sondern zunächst durch das geöffnete Absperrventil und die Rücklaufleitung zurück in den Reduktionsmitteltank. Nach dem vollständigen Befüllen des Systems mit Reduktionsmittel kann die Rücklaufleitung durch das Absperrventil geschlossen werden, so dass das Reduktionsmittel nicht mehr zurück in den Reduktionsmitteltank strömen kann. Wenn dann der Fluiddruck in der Druckleitung erhöht wird, öffnet das Rückschlagventil und das Reduktionsmittel kann, gegebenenfalls über eine Vormischeinrichtung, in das Abgassystem des Verbrennungsmotors gefördert werden.

Um das Öffnen des Rückschlagventils zum richtigen Zeitpunkt sicherzustellen, ist die Vorspannkraft, welche das Rückschlagventil geschlossen hält, größer als die bei geöffneter Rücklaufleitung durch den Fluiddruck auf das Rückschlagventil wirkende Kraft. Dadurch wird sichergestellt, dass während des Vorspülens bzw. Befüllens kein Reduktionsmittel durch das Rückschlagventil strömen kann. Ferner ist die Vorspannkraft so gewählt, dass bei geschlossener Rücklaufleitung, d. h. wenn das Absperrventil die Rücklaufleitung absperrt, die durch den Fluiddruck auf das Rückschlagventil wirkende Kraft die Vorspannkraft des Rückschlagventils übersteigt, so dass dieses geöffnet wird und das Reduktionsmittel durch das Rückschlagventil strömen kann. Wenn nach Schließen der Rücklaufleitung die Dosierpumpe weiter Reduktionsmittel fördert, steigt der Druck in der Druckleitung strömungsabwärts hinter der Dosierpumpe automatisch, so dass, wenn die Vorspannkraft des Rückschlagventils passend gewählt ist, dieses selbsttätig geöffnet wird. Da bei geöffneter Rücklaufleitung Reduktionsmittel aus der Druckleitung abfließen kann, kommt es automatisch zu einem Absinken des Druckes in der Druckleitung, so dass bei passend gewählter Vorspannkraft das Rückschlagventil in diesem Zustand automatisch geschlossen wird. Das Rückschlagventil kann beispielsweise durch eine Druckfeder, beispielsweise eine Schraubenfeder vorgespannt werden, deren Federkraft auf den im Betrieb in der Druckleitung auftretenden Fluiddruck so abgestimmt ist, dass das automatische Schließen und Öffnen des Rückschlagventils, wie vorangehend beschrieben, sichergestellt ist.

Weiter bevorzugt ist das Rückschlagventil direkt an einer Mischkammer einer Vormischeinrichtung angeordnet, in welcher das von der Dosierpumpe geförderte Reduktionsmittel mit einem Druckgas beaufschlagt bzw. gemischt wird. Bei dieser Anordnung kann das Rückschlagventil eine Doppelfunktion übernehmen. Zum einen stellt das Rückschlagventil, wie vorangehend beschrieben, beim Entlüften bzw. Vorspülen der Dosierpumpe sicher, dass das Reduktionsmittel zunächst noch nicht weiter in die Vormischeinrichtung und das Abgassystem des Verbrennungsmotors strömt. Zum anderen stellt das Rückschlagventil direkt an der Vormischeinrichtung sicher, dass kein Druckgas, insbesondere Druckluft, mit dem Reduktionsmittel zurück in die Druckleitung strömen kann. Ein Rückströmen von Reduktionsmittel und insbesondere eines Reduktionsmittel-/Druckgasgemisches ist unerwünscht, da beispielsweise Harnstoff in Kontakt mit Luft zur Kristallisation neigt. Aus diesem Grund ist das Rückschlagventil vorzugsweise direkt am Mischbereich, in dem das Druckgas mit dem Reduktionsmittel gemischt wird, angeordnet, so dass der stromabwärts von dem Rückschlagventil gelegene Bereich durch das Druckgas von Reduktionsmittelresten befreit werden kann und der stromaufwärts von dem Rückschlagventil gelegene Leitungsbereich sicher von rückströmenden Reduktionsmittel und Druckgas freigehalten wird. Durch diese Doppelfunktion des Rückschlagventils kann der Aufbau des gesamten Dosierpumpenaggregates erheblich vereinfacht werden und gleichzeitig eine große Betriebssicherheit gewährleistet werden.

Weiter bevorzugt ist in Strömungsrichtung vor dem Rückschlagventil und dem Absperrventil in der Druckleitung oder Rücklaufleitung ein den Fluiddruck erfassender Drucksensor angeordnet. Über diesen Drucksensor können verschiedene Betriebszustände des Dosierpumpenaggregates und insbesondere mögliche Fehler im Betrieb des Dosierpumpenaggregates erfasst werden. Zunächst kann der Drucksensor dazu verwendet werden, beim Vorspülen bei Inbetriebnahme des Dosierpumpenaggregates festzustellen, wann die Druckleitung vollständig mit Reduktionsmittel gefüllt und das Dosierpumpenaggregat somit betriebsbereit ist. Wenn der Drucksensor den diesen Betriebszustand anzeigenden Druckschwellwert erfasst, kann dann das Absperrventil in der Rücklaufleitung geschlossen werden, so dass die Dosierpumpe dann das Reduktionsmittel über das Rückschlagventil gegebenenfalls über eine Vormischeinrichtung in den Abgasstrom fördert. Ferner kann der Drucksensor dazu verwendet werden, eine weiter stromabwärts gelegene Verstopfung der Druckleitung und insbesondere der Einspritzdüse in dem Abgasstrom zu erfassen. Dann steigt nämlich der Druck in der Druckleitung über einen im Normalbetrieb auftretenden Druckwert an, was durch den Drucksensor erfasst wird. Es kann dann z. B. von einer Steuereinrichtung eine entsprechende Warnmeldung ausgegeben und das Dosierpumpenaggregat gegebenenfalls abgeschaltet werden. Ferner kann über den Drucksensor auch festgestellt werden, wenn der Reduktionsmittelvorrat im Reduktionsmitteltank verbraucht ist. Dann nämlich sinkt im Betrieb der Druck in der Druckleitung unter einen im Normalbetrieb auftretenden Druckwert ab. Wenn der Drucksensor entsprechend einen unteren Druckgrenzwert erfasst, kann so der fehlende Reduktionsmittelvorrat erfasst und z. B. über eine Steuereinrichtung entsprechend zur Anzeige gebracht werden. Auch in diesem Zustand kann das Dosierpumpenaggregat bis zum Auffüllen des Reduktionsmittels durch eine Steuereinrichtung zunächst abgeschaltet werden, um Beschädigungen im Betrieb ohne Reduktionsmittel zu vermeiden.

Um die Inbetriebnahme des Dosierpumpenaggregates nach dem Vorspülen bzw. Entlüften zu gewährleisten, ist das erste Absperrventil vorzugsweise derart mit dem Drucksensor gekoppelt, dass bei Erreichen eines vorbestimmten von dem Drucksensor erfassten Fluiddruckes das erste Absperrventil in seine die Rücklaufleitung schließende Stellung umgeschaltet wird. Der vorbestimmte Grenzwert für den Fluiddruck, bei welchem die Rücklaufleitung geschlossen wird, ist so gewählt, dass immer die vollständige Füllung der Druckleitung mit Reduktionsmittel bei Inbetriebnahme des Dosierpumpenaggregates sichergestellt werden kann. Das heißt, die Dosierpumpe wird zunächst entlüftet, bevor das Dosierpumpenaggregat in Betrieb genommen und Reduktionsmittel in den Abgasstrom eingespritzt wird. Dies ist insbesondere dann wichtig, wenn das Dosierpumpenaggregat nach Auffüllen des Reduktionsmitteltanks erstmalig wieder in Betrieb genommen wird.

Das erste Absperrventil ist bevorzugt derart vorgespannt, dass es in Ruhelage in seiner die Rücklaufleitung öffnenden Stellung gehalten wird. Auf diese Weise wird sichergestellt, dass dann, wenn das Dosierpumpenaggregat außer Betrieb ist, die Rücklaufleitung zu dem Reduktionsmitteltank hin geöffnet ist, so dass das gesamte System und insbesondere die Druckleitung nicht unter Druck stehen. Auf diese Weise kann sichergestellt werden, dass das vorgespannte Rückschlagventil die Druckleitung im ausgeschalteten Zustand des Dosierpumpenaggregates sicher verschlossen hält, so dass nicht unbeabsichtigt Reduktionsmittel aus dem Dosierpumpenaggregat austreten kann. Die Vorspannung kann beispielsweise durch Federkraft erfolgen. Zum Schließen des ersten Absperrventils muss eine Betätigungskraft aufgebracht werden, welche größer als die Vorspannkraft ist.

Besonders bevorzugt ist eine Vormischeinrichtung vorgesehen, in welcher das von der Dosierpumpe geförderte Reduktionsmittel mit einem Druckgas beaufschlagt bzw. gemischt wird, und ist eingangsseitig in einer zu der Vormischeinrichtung führenden Druckgasleitung ein zweites Absperrventil zur wahlweisen Unterbrechung der Druckgaszufuhr angeordnet. Die Druckgaszufuhr kann beispielsweise von einer zentralen Druckluftversorgung eines Kraftfahrzeugs, insbesondere Lkw, erfolgen. Das zweite Absperrventil dient dann dazu, die Druckgas bzw. Druckluftzufuhr in das Dosierpumpenaggregat gezielt Ein- und Ausschalten zu können. Bei Inbetriebnahme des Dosierpumpenaggregates wird das zweite Absperrventil geöffnet, um Druckgas in das Dosierpumpenaggregat einströmen zu lassen und das geförderte Reduktionsmittel in der Vormischeinrichtung mit Druckgas zu vermischen. Dabei muss in der Vormischeinrichtung keine feinste Mischung zwischen Reduktionsmittel und Druckgas erfolgen, vielmehr kann es ausreichend sein, das Reduktionsmittel lediglich mit Druckgas zu beaufschlagen, so dass größere Reduktionsmitteltropfen durch das Druckgas weiter zu einer Einspritzdüse in den Abgasstrom gefördert werden. Beim Austritt aus der Einspritzdüse erfolgt dann bevorzugt ein feineres Zerstäuben des Reduktionsmittels im Abgasstrom.

Besonders bevorzugt ist das erste Absperrventil in der Rücklaufleitung mit dem zweiten Absperrventil in der Druckgasleitung derart gekoppelt, dass bei geöffneter Druckgasleitung die Rücklaufleitung geschlossen ist. Dies ermöglicht eine sehr einfache und sichere Inbetriebnahme des Dosierpumpenaggregates, da nicht beide Absperrventile unabhängig voneinander geschaltet werden müssen. Durch die Kopplung ist es vielmehr möglich, nur eines der Ventile, beispielsweise das zweite Absperrventil zu betätigen und gleichzeitig das andere, beispielsweise das erste Absperrventil automatisch mit umzuschalten. So ist es beispielsweise möglich, durch Öffnen des zweiten Absperrventils zunächst die Druckgaszufuhr zu dem Dosierpumpenaggregat einzuschalten, wobei dann durch die Kopplung automatisch die Rücklaufleitung geschlossen wird, so dass auch das von der Dosierpumpe geförderte Reduktionsmittel dann unter Öffnung des Rückschlagventils in die Vormischeinrichtung gefördert wird, wo es mit dem Druckgas gemischt wird. Umgekehrt wird durch die Kopplung beim Ausschalten des Dosierpumpenaggregats sichergestellt, dass dann, wenn die Druckgaszufuhr durch Schließen des zweiten Absperrventils unterbrochen wird, automatisch auch das erste Absperrventil in der Rücklaufleitung geöffnet wird, so dass das von der Dosierpumpe weiter geförderte Reduktionsmittel zurück in den Reduktionsmitteltank strömen kann bzw. die Druckleitung drucklos geschaltet wird. Auf diese Weise ist sichergestellt, dass kein Reduktionsmittel in die Vormischeinrichtung und weiter stromabwärts zu der Einspritzdüse in den Abgasstrom gelangt, wenn kein Druckgas in das Dosierpumpenaggregat einströmt. So kann ein unerwünschtes Verstopfen oder Zusetzen der Leitungen stromabwärts des Rückschlagventils in der Druckleitung verhindert werden.

Zur Kopplung der beiden Absperrventile ist das erste Absperrventil besonders bevorzugt durch Druckgas betätigbar, wobei die zur Vormischeinrichtung führende Druckgasleitung in Strömungsrichtung hinter dem zweiten Absperrventil mit einem Betätigungsanschluss des ersten Absperrventils, z. B. über eine Betätigungsleitung verbunden ist. Dies ermöglicht eine rein pneumatische Kopplung zwischen den beiden Absperrventilen, so dass die Zahl der elektrisch betätigten Komponenten in dem Dosierpumpenaggregat reduziert werden kann, was zu einem weiter vereinfachten Aufbau führt. Die Anordnung ermöglicht, dass das erste Absperrventil vorzugsweise gegen eine Federvorspannung durch den Druck des der Vormischeinrichtung zugeführtem Druckgas geschlossen wird. Es sind somit keinerlei zusätzliche Betätigungselemente zum Schließen des ersten Absperrventils erforderlich.

Der Betätigungsanschluss des ersten Absperrventils ist bevorzugt mit der zu der Vormischeinrichtung führenden Druckgasleitung in einem Bereich verbunden, welcher in Strömungsrichtung vor einer Drosselstelle in der Druckgasleitung liegt. Auf diese Weise ist ein ausreichend hoher Gasdruck an dem Betätigungsanschluss des ersten Absperrventils zu dessen Betätigung sichergestellt, während die Vormischeinrichtung über die Drosselstelle mit einem geringeren Gas- bzw. Luftdruck versorgt wird.

Weiter bevorzugt ist das zweite Absperrventil derart mit einem in Strömungsrichtung vor dem Rückschlagventil und dem ersten Absperrventil in der Druckleitung oder der Rücklaufleitung angeordneten Drucksensor gekoppelt, dass das zweite Absperrventil bei Erreichen eines vorbestimmten vom Drucksensor erfassten Fluiddruckes in seine die Druckgasleitung öffnende Stellung umgeschaltet wird. Das heißt bei Inbetriebnahme des Dosierpumpenaggregates kann zunächst die Dosierpumpe eingeschaltet werden, wobei die Druckgaszufuhr durch das zweite Absperrventil zunächst noch geschlossen ist. Es erfolgt über die noch geöffnete Rücklaufleitung zunächst ein Vorspülen bzw. Entlüften der Dosierpumpe. Wenn dann über den Drucksensor festgestellt wird, dass in der Druckleitung ein bestimmter Druckwert erreicht ist, welcher anzeigt, dass die Druckleitung vollständig mit Reduktionsmittel gefüllt ist, wird dann das zweite Absperrventil geöffnet, so dass das Druckgas in das Dosierpumpenaggregat einströmen und zu der Vormischeinrichtung strömen kann. Wenn nun, wie vorangehend beschrieben auch das erste Absperrventil mit dem zweiten Absperrventil gekoppelt ist, kann gleichzeitig der Rücklauf zu dem Reduktionsmitteltank geschlossen werden, so dass das Reduktionsmittel über das Rückschlagventil, welches dann öffnet, in die Vormischeinrichtung gefördert wird. Die Kopplung von Drucksensor und erstem Absperrventil kann elektronisch über eine Steuereinrichtung aber auch mechanisch, pneumatisch oder hydraulisch realisiert werden.

Das zweite Absperrventil in der Druckgasleitung ist besonders bevorzugt derart vorgespannt, dass es in Ruhelage in seiner die Druckgasleitung unterbrechenden Stellung gehalten wird. Auf diese Weise wird beim Abschalten des Dosierpumpenoggregates stets sichergestellt, dass die Druckgaszufuhr zu dem Dosierpumpenaggregat unterbrochen wird. Das zweite Absperrventil kann beispielsweise durch Federkraft vorgespannt sein, so dass es durch eine von außen aufzubringende Betätigungskraft geöffnet werden muss. Dabei wird die Betätigungskraft vorzugsweise elektrisch, z.B. elektromagnetisch erzeugt. Wenn dann die Stromzufuhr, z. B. die Bestromung einer Spule in dem Elektromagneten ausgeschaltet wird, fällt die Betätigungskraft weg und die Vorspannkraft schließt automatisch das Absperrventil.

In der Vormischeinrichtung kann ferner ausgangsseitig der Druckgaszufuhr ein weiteres Rückschlagventil angeordnet sein, welches beim Abschalten der Druckgaszufuhr zu der Vormischeinrichtung verhindert, dass Reduktionsmittel von der Vormischeinrichtung zurück in die Druckgasleitung fließen kann. Somit kann sichergestellt werden, dass die Druckgasleitung frei von Verunreinigungen gehalten wird. Dieses zweite Rückschlagventil ist vorzugsweise ebenfalls vorgespannt, so dass es sich er bei einem bestimmten Druck in der Druckgasleitung öffnet und beim Unterschreiten dieses Druckwertes bzw. beim Abschalten der Duckgaszufuhr, beispielsweise durch Schließen des zweiten Absperrventils, automatisch schließt.

Nachfolgend wird die Erfindung beispielhaft anhand der beigefügten Figuren beschrieben. In diesen zeigt:
- Fig. 1: einen Schaltplan der hydraulischen Komponenten eines erfindungsgemäßen Dosierpumpenaggregates,
- Fig. 2: in einem geschnittenen Ausschnitt die Vormischeinrichtung eines Dosierpumpenaggregates gemäß Fig. 1,
- Fig. 3: in separater Schnittansicht die Vormischeinrichtung gemäß Fig. 2 mit geschlossenen Rückschlagventilen,
- Fig. 4: die Vormischeinrichtung gemäß Fig. 3 mit geöffneten Rückschlagventil für die Druckgaszufuhr,
- Fig. 5: die Vormischeinrichtung gemäß Figuren 3 und 4 mit geöffneten Rückschlagventil für die Reduktionsmittelzufuhr und geöffneten Rückschlagventil für die Druckgaszufuhr,
- Fig. 6: eine Schnittansicht des Absperrventils in der Rücklaufleitung im geschlossenen Zustand und
- Fig. 7.: eine Schnittansicht des Absperrventils gemäß Fig. 6 im geöffneten Zustand.

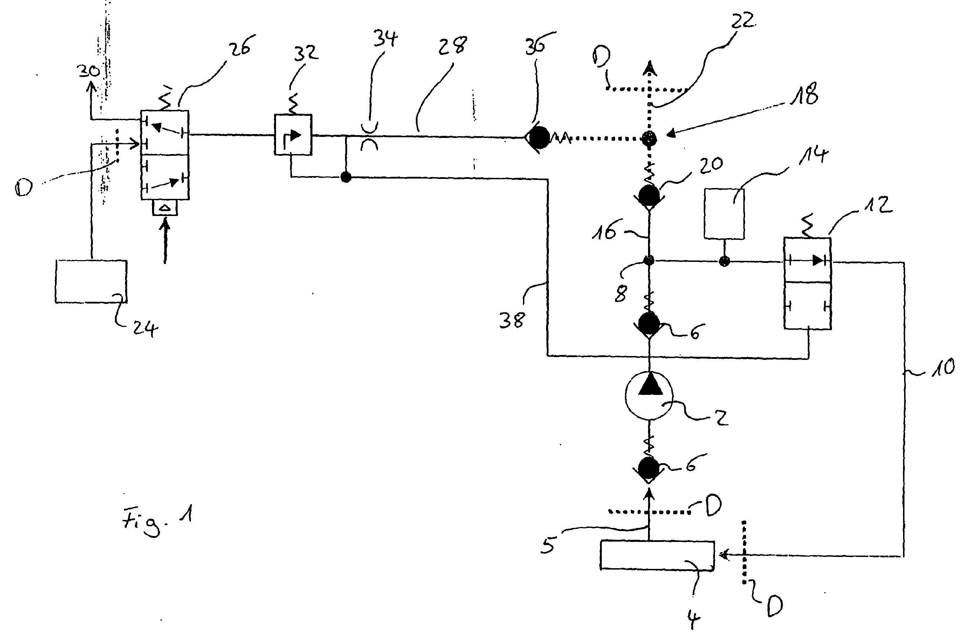

Zunächst wird die grundlegende Funktion eines Ausführungsbeispieles eines erfindungsgemäßen Dosierpumpenaggregates anhand des Schaltplans in Fig. 1 beschrieben.

Kernstück des Dosierpumpenaggregates ist eine Dosierpumpe 2, welche als Membranpumpe ausgebildet ist, mit einem zugehörigen Antrieb. Durch Steuerung des Antriebs und insbesondere Steuerung der Anzahl von Pumpenhüben und/oder der Hubgeschwindigkeit kann die Menge des von der Dosierpumpe 2 geförderten Reduktionsmittels eingestellt werden, um die Reduktionsmittelmenge exakt an den Bedarf aufgrund des aktuell ablaufenden Verbrennungsprozesses im Motor anpassen zu können. Als Reduktionsmittel wird vorzugsweise eine wässrige Harnstofflösung verwendet. Das Reduktionsmittel wird in einem Reduktionsmitteltank 4 vorgehalten, aus dem es über eine Saugleitung 5 durch die Dosierpumpe 2 angesaugt wird. Im gezeigten Beispiel ist vor und hinter der Dosierpumpe 2 in bekannter Weise jeweils ein Rückschlagventil 6 angeordnet, welche wesentlicher Bestandteil der Membranpumpe sind. So stellt das in Strömungsrichtung vor der Pumpe gelegene Rückschlagventil 6 sicher, dass beim Pumphub das Reduktionsmittel nicht zurück in den Reduktionsmitteltank 4 gefördert wird. Das in Strömungsrichtung hinter der Dosierpumpe 2 liegende Rückschlagventil 6 stellt umgekehrt sicher, dass beim Ansaugen nur Reduktionsmittel aus dem Reduktionsmitteltank 4 angesaugt wird und nicht aus der Druckleitung zurückgesaugt wird.

Hinter der Dosierpumpe 2 und dem zweiten Rückschlagventil 6 zweigt an einem Verzweigungspunkt 8 eine Rücklaufleitung 10 ab, welche zurück zu dem Reduktionsmitteltank 4 führt und zur Entlüftung des Systems bei Inbetriebnahme der Dosierpumpe 2 dient.

In der Rücklaufleitung 10 ist ein Unterbrechungs- bzw. Absperrventil 12 angeordnet, durch welches die Rücklaufleitung 10 verschlossen werden kann, so dass durch die Rücklaufleitung 10 kein Reduktionsmittel zu dem Reduktionsmitteltank 4 zurückfließen kann. Im gezeigten Ruhezustand befindet sich das Absperrventil 12 in der geöffneten Stellung, in welcher die Rücklaufleitung 10 freigegeben ist. In der Rücklaufleitung 10 ist in Strömungsrichtung vor dem Absperrventil 12 und hinter dem Verzweigungspunkt 8 ein Drucksensor 14 angeordnet, welcher den Fluiddruck vor dem Absperrventil 12 und somit in der Druckleitung 16 hinter der Dosierpumpe 2 erfasst.

Die Druckleitung 16 führt von der Dosierpumpe 2 über den Verzweigungspunkt 8 zu dem Mischbereich bzw. der Mischkammer 18 einer Vorrichtungseinrichtung, in welcher das Reduktionsmittel mit Druckgas, in diesem Fall Druckluft, beaufschlagt bzw. gemischt wird. Direkt vor dem Mischbereich 18 ist in der Druckleitung 16, d. h. am Ende der Druckleitung 16 ein Rückschlagventil 20 angeordnet, welches durch Vorspannung, beispielsweise einer Feder, in der gezeigten Ruhelage in einer geschlossenen Position gehalten wird und ein Zurückströmen von Reduktionsmittel und insbesondere von Druckgas aus dem Mischbereich 18 in die Druckleitung 16 verhindert. In Strömungsrichtung hinter dem Mischbereich 18 schließt sich eine Leitung 22 an, welche zu der Einspritzdüse im Abgassystem des Kraftfahrzeuges führt.

Die in diesem gezeigten Beispiel als Druckgas verwendete Druckluft wird von einer Druckluftversorgung 24 des Kraftfahrzeuges bereitgestellt. Derartige Druckluftversorgungssysteme sind in LkW üblicherweise insbesondere zur Betätigung der Bremsen vorhanden. Mit dieser zentralen Druckluftversorgung 24 ist das gezeigte Dosierpumpenaggregat verbunden, wobei das Dosierpumpenaggregat eingangsseitig ein Solenoid bzw. Magnetventil 26 aufweist, welches die Druckluftleitung 28, die zu dem Mischbereich 18 führt, wahlweise mit der Druckluftversorgung 24 verbindet oder zur Atmosphäre 30 öffnet. Das elektrisch betätigte Magnetventil 26 ist so vorgespannt, dass es in seiner Ruhelage in der gezeigten Stellung gehalten wird, in der die Druckluftleitung 28 zur Atmosphäre 30 geöffnet ist.

In der Druckluftleitung 28 sind in Strömungsrichtung hinter dem Magnetventil 26 ein Druckregler 32 und hinter diesem eine Drossel 34 angeordnet.

An der Mischkammer bzw. dem Mischbereich 18 endet die Druckluftleitung in einem Rückschlagventil 36, welches so vorgespannt ist, dass es in der gezeigten Ruhelage geschlossen ist und durch den in der Druckluftleitung 28 wirkenden Druck gegen seine Vorspannung geöffnet werden kann. So ist sichergestellt, dass immer dann, wenn keine Druckluft aus der Druckluftleitung 28 in die Mischkammer 18 strömt, das Rückschlagventil 36 geschlossen ist, so dass kein Reduktionsmittel aus dem Mischbereich 18 in die Druckluftleitung 28 eindringen kann.

Das Absperrventil 12 in der Rücklaufleitung 10 ist druckluftbetätigt und über eine Betätigungsleitung 38 mit der Druckluftleitung 28 verbunden, wobei die Betätigungsleitung 38 zwischen dem Druckregler 32 und der Drossel 34 mit der Druckluftleitung 28 in Verbindung steht. Die Betätigungsleitung 38 sorgt dafür, dass dann, wenn das Magnetventil 26 umgeschaltet wird, so dass die Druckluftleitung 28 mit der Druckluftversorgung 24 in Verbindung steht, auch die Betätigungsleitung 38 unter Druck gesetzt wird. Der in der Betätigungsleitung 38 anstehende Luftdruck bewirkt dann ein Umschalten des Absperrventils 12 gegen dessen Vorspannung, so dass die Rücklaufleitung 10 verschlossen wird.

Die vorangehend beschriebenen Elemente, welche innerhalb der in Fig. 1 durch gestrichelte Linien D angedeuteten Grenze liegen, d. h. insbesondere die Dosierpumpe 2, das Absperrventil 12, das Magnetventil 26, der Mischpunkt 18, die Rückschlagventile und die diese Bauteile verbindenden Leitungen, sind sämtlich in das Dosierpumpenaggregat integriert, so dass das Dosierpumpenaggregat neben elektrischen Anschlüssen nach außen hin lediglich vier Fluidanschlüsse aufweist, nämlich zur Verbindung mit der Druckluftversorgung 24, zum Anschluss der zu der Einspritzdüse führenden Leitung 22, zum Anschluss der zu dem Reduktionsmitteltank 4 führenden Saugleitung 5 und zur Verbindung der Rücklaufleitung 10 mit dem Reduktionsmitteltank 4.

Bei Inbetriebnahme des Systems verbleibt das Magnetventil 26 zunächst in seiner geschlossenen Ruhelage (gezeigte Position), in welcher die Druckluftleitung 28 von der Druckluftversorgung 24 getrennt ist. Als erstes wird die Dosierpumpe 2 in Betrieb genommen, welche über die Saugleitung 5 Reduktionsmittel aus dem Reduktionsmitteltank 4 ansaugt. Die Vorspannung des Rückschlagventils 20 in der gezeigten geschlossenen Stellung ist so gewählt, dass bei geöffneter Rücklaufleitung 10 der Druck in der Druckleitung 16 nicht ausreicht, dass Rückschlagventil gegen die Vorspannung zu öffnen.

Da zunächst in der Druckluftleitung 28 kein Druck anliegt, ist auch die Betätigungsleitung 38 zunächst drucklos, so dass das Absperrventil 12 in seiner geöffneten Ruhestellung verbleibt und die Rücklaufleitung 10 geöffnet ist. Auf diese Weise fördert die Dosierpumpe 2 zunächst Reduktionsmittel aus dem Reduktionsmitteltank 4 und über den Verzweigungspunkt 8 durch die Rücklaufleitung 10 zurück in den Reduktionsmitteltank 4. Dies dient dazu, das System bei Inbetriebnahme zu entlüftend, d. h. zunächst sicherzustellen, dass die Druckleitung 15 vollständig mit Reduktionsmittel gefüllt ist.

Wenn die Druckleitung 16 und die Rücklaufleitung 10 vollständig mit Reduktionsmittel gefüllt sind, erreicht der Fluiddruck in der Druckleitung 16 und in der Rücklaufleitung 10 vor dem Absperrventil 12 einen bestimmten Grenzwert, welcher von dem Drucksensor 14 erfasst wird. Wenn dieser Grenzwert von dem Drucksensor 14 erfasst wird, schaltet eine Steuerung das Magnetventil 26 um, so das über die Druckluftversorgung 24 des Lkw die Druckluftleitung 28 mit Druckluft versorgt wird. Dadurch wird auch die Betätigungsleitung 38 mit Druck beaufschlagt, wodurch das Absperrventil 12 gegen die Federvorspannung umgeschaltet wird und auf diese Weise die Rücklaufleitung 10 geschlossen wird. Da nun die Druckleitung 16 nicht mehr über die Rücklaufleitung 10 zu dem Reduktionsmitteltank 4 hin geöffnet ist, steigt der Fluiddruck bei weiterem Betrieb der Dosierpumpe 2 in der Druckleitung 16 so weit an, dass der Druck ausreicht, das Rückschlagventil 20 gegen seine Federvorspannung zu öffnen, so dass das Reduktionsmittel in den Mischbereich 18 strömen kann und dort mit der Druckluft aus der Druckluftleitung 28 beaufschlagt wird. Druckluft und Reduktionsmittel strömen dann gemeinsam durch die Leitung 22 zu einer Einspritzdüse in der Abgasleitung des Lkw.

Über die Anzahl der Pumpenhübe der Dosierpumpe kann im Betrieb die Menge des zugeführten Reduktionsmittels eingestellt werden. Der Druckluftstrom durch die Druckluftleitung 28 in den Mischbereich 18 ist dabei konstant.

Wenn die Anlage außer Betrieb genommen wird, insbesondere beim Abstellen des Fahrzeuges, wird zunächst die Dosierpumpe 2 abgeschaltet, so dass kein Reduktionsmittel mehr aus dem Reduktionsmitteltank 4 gefördert wird. Dadurch sinkt der Druck in der Druckleitung 16 so weit ab, dass das Rückschlagventil 20 aufgrund seiner Vorspannung schließt und verhindert, dass weiteres Reduktionsmittel in den Mischbereich 18 eindringt. Da das Magnetventil 26 zunächst weiter geöffnet ist, strömt weiter Druckluft durch das Rückschlagventil 36 in den Mischbereich 18 ein und spült dort noch vorhandene Reduktionsmittelreste über die Leitung 22 aus.

Wenn dann das Magnetventil 26 durch Abschalten der Stromversorgung geschlossen wird, ist auch der Druckluftstrom durch die Druckluftleitung 28 und das Rückschlagventil 36 abgeschaltet, so dass das Gesamtsystem außer Betrieb genommen ist. In diesem Zustand schaltet auch das Absperrventil 12 wieder in seine Ruhelage zurück, d. h. die Rücklaufleitung 10 ist geöffnet.

Durch die Anordnung des Rückschlagventils 20 ist sichergestellt, dass keine Luft von der Mischkammer bzw. dem Mischbereich 18 in die Druckleitung 16 eindringen kann. So kann eine Kristallisation des Reduktionsmittels in der Druckleitung 16 verhindert werden. Da ferner nach dem Abschalten der Dosierpumpe 2 durch den konstanten Druckluftstrom im Mischbereich 18 dieser automatisch ausgespült wird, kann auch eine Kristallisation von Reduktionsmittel im Mischbereich 18 und in der sich abschließenden Leitung 22 verhindert werden.

Der Drucksensor 14, welcher bevorzugt ein elektrisches Signal ausgibt, dient neben der Erfassung der vollständigen Entlüftung der Druckleitung 16 auch dazu, weitere unerwünschte Betriebszustände zu erkennen. So kann durch den Drucksensor 14 eine verstopfte Rücklaufleitung 10 erkannt werden, nämlich wenn der Druck bei geöffnetem Absperrventil 12 einen vorbestimmten Grenzwert übersteigt, welcher bei geöffneter Rücklaufleitung 10 normalerweise nicht auftreten kann. Ferner kann der Drucksensor 14 auch erfassen, dass die Einspritzdüse in der Abgasleitung des Fahrzeuges verstopft ist. Dann steigt nämlich der Druck in der Druckleitung 16 bei geöffnetem Magnetventil 26 ebenfalls über einen vorbestimmten Grenzwert an, welcher bei korrekt arbeitender Einspritzdüse normalerweise nicht auftreten kann. Darüber hinaus kann über den Drucksensor 14 auch erfasst werden, dass der Reduktionsmitteltank 4 leer ist. Dann nämlich sinkt im Betrieb der Druck in der Druckleitung 16 unter einen vorbestimmten Grenzwert ab, welcher im normalen Betrieb bei geschlossener Rücklaufleitung 10 normalerweise nicht auftreten kann.

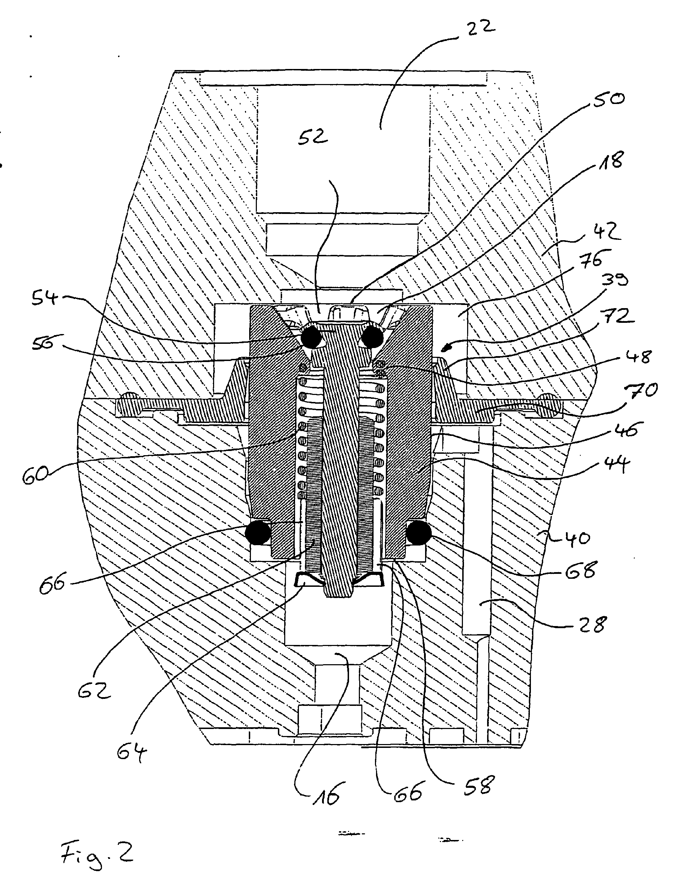

Anhand der Figuren 2 bis 5 wird nachfolgend ein beispielhafter Aufbau der Vormischeinrichtung im Wesentlichen bestehend aus dem Mischbereich 18 und den Rückschlagventilen 20 und 36 beschrieben.

Fig. 2 zeigt eine Schnittansicht der Vormischeinrichtung 39 in einem in einen Pumpenkopf eingebauten Zustand. Der Pumpenkopf wird im Wesentlichen von einer Zentralplatte 40 und einer an dieser anliegenden Stirnplatte 42 gebildet, wobei zwischen den Platten 40 und 42 Strömungskanäle ausgebildet sind und die Vormischeinrichtung 39 angeordnet ist.

In der Stirnplatte 42 ist die Leitung 22 als Anschluss ausgebildet, an welchen eine Fluidleitung angebunden werden kann, welche zu der Einspritzdüse im Abgassystem des Fahrzeuges führt. In der Zentralplatte 40 sind die Druckleitung 16 sowie die Druckluftleitung 28 in Form von Kanälen in der Oberfläche und sich daran anschließenden Durchgangslöchern ausgebildet.

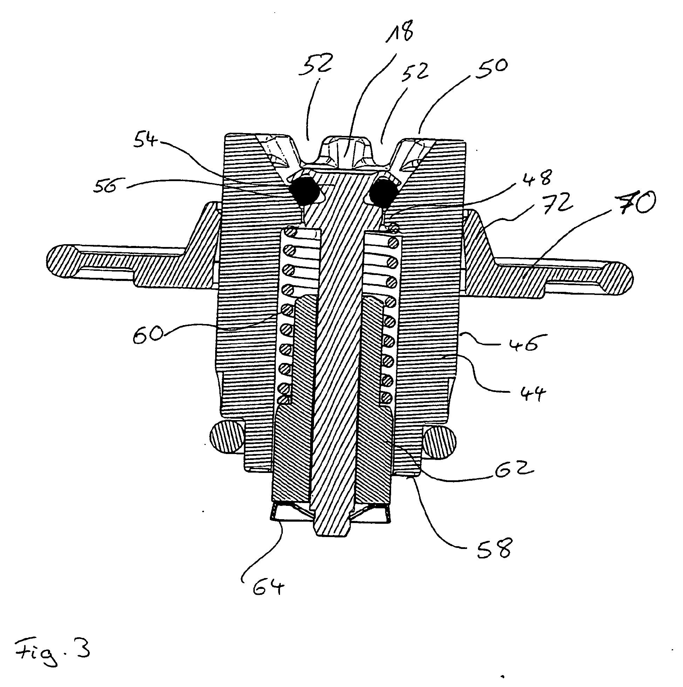

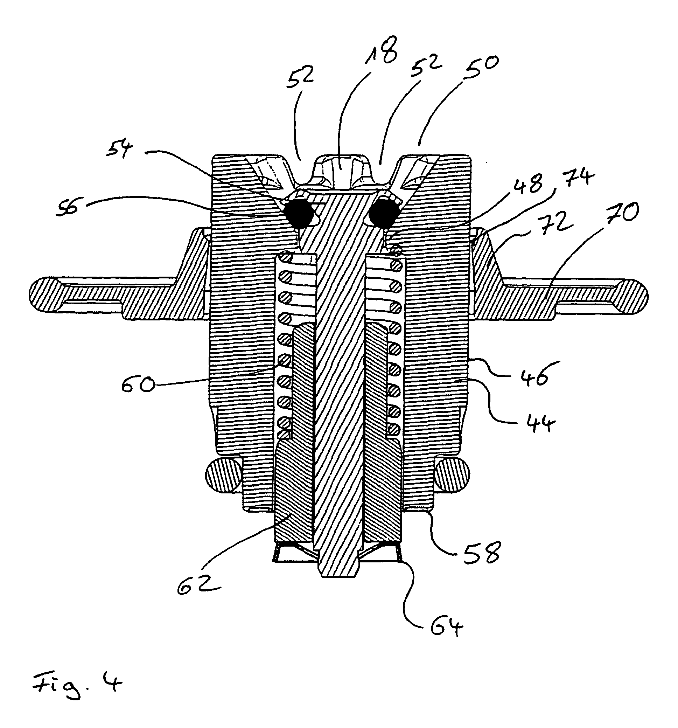

Die Vormischeinrichtung weist als zentrales Bauteil eine zylindrische Hülse 44 mit zylindrischer Außenwandung 46 auf. Im Inneren der Hülse 44 ist eine Einschnürung 48 ausgebildet, welche den Innenraum der Hülse 46 in zwei Teile teilt. Der erste Teil des Innenraums erweitert sich ausgehend von der Einschnürung 48 zu einer ersten Stirnseite 50 der Hülse 44 hin trichterförmig. Dieser Bereich ist der eigentliche Mischbereich 18 bzw. die Mischkammer 18 der Vormischeinrichtung 39. In der Umfangswandung des Mischbereiches 18 sind gleichmäßig über den Umfang verteilt Ausnehmungen bzw. Durchbrechungen 52 ausgebildet, welche als Eintrittsöffnungen für die Druckluft dienen. Die von der Einschnürung 48 umgebende Öffnung im Inneren der Hülse 44 dient als Eintrittsöffnung für das Reduktionsmittel in den Mischbereich 18. Dieser Bereich ist durch einen Kolben 54 mit einem in eine Umfangsnut eingelegten O-Ring 56 verschlossen. Dabei kann der O-Ring 56, wie in den Figuren 3 und 4 gezeigt, dichtend an der trichterförmigen Innenwandung des Mischbereiches 18 im Inneren der Hülse 44 zur Anlage kommen.

Der Kolben 54 erstreckt sich mit einer Kolbenstange 55 durch die Einschnürung 48 hindurch in den zweiten Bereich im Inneren der Hülse 44 zu der zweiten Stirnseite 58, welche der ersten Stirnseite 50 abgewandt ist. In dem zweiten Teil des Innenraums der Hülse 44 ist eine Druckfeder angeordnet, welche sich mit einem ersten Ende an der Einschnürung 48 abstützt. Das entgegengesetzte Ende der Druckfeder 60, welche als Schraubfeder ausgebildet ist, liegt an einer die Kolbenstange 55 umgebenden Führungshülse 62 an einem der Einschnürung 48 zugewandten Absatz an. Die Führungshülse 62 führt die Kolbenstange und damit den Kolben 54 im Inneren der Hülse 44, in dem sie an der Innenwandung der Hülse 44 anliegt. Die Führungshülse 62 stützt sich über einen Federring 64 an den dem Kolben 54 abgewandten Längsende der Kolbenstange 55 ab. So drückt die Druckfeder 60 die Kolbenstange 55 in die Richtung zu der zweiten Stirnseite 58 der Hülse 40, so dass der Kolben 54 mit dem O-Ring 56 gegen die trichterförmige bzw. konische Innenwandung des Mischbereiches 18 gedrückt wird. Auf diese Weise wird der Kolben 54, welcher das Rückschlagventil 20 in Fig. 1 bildet, in seiner Ruhelage im geschlossenen Zustand gehalten, wie in den Figuren 3 und 4 gezeigt ist.

Die Führungshülse weist an ihrem Außenumfang Längsnuten 66 auf (in den Figuren 3 bis 5 nicht gezeigt), durch welche das Reduktionsmittel durch die Druckleitung 16 in das Innere der Hülse 44 zu der Einschürung 48 strömen kann. Durch den die Hülse 44 außen umgebende O-Ring 58 wird dabei verhindert, dass das Reduktionsmittel außen an der Hülse 44 vorbeiströmen kann. Im eingesetzten Zustand dichtet der O-Ring 68 die Außenwandung der Hülse 44 gegen die Innenwandung einer Ausnehmung, in welcher die Hülse 44 in der Zentralplatte 40 angeordnet ist, ab.

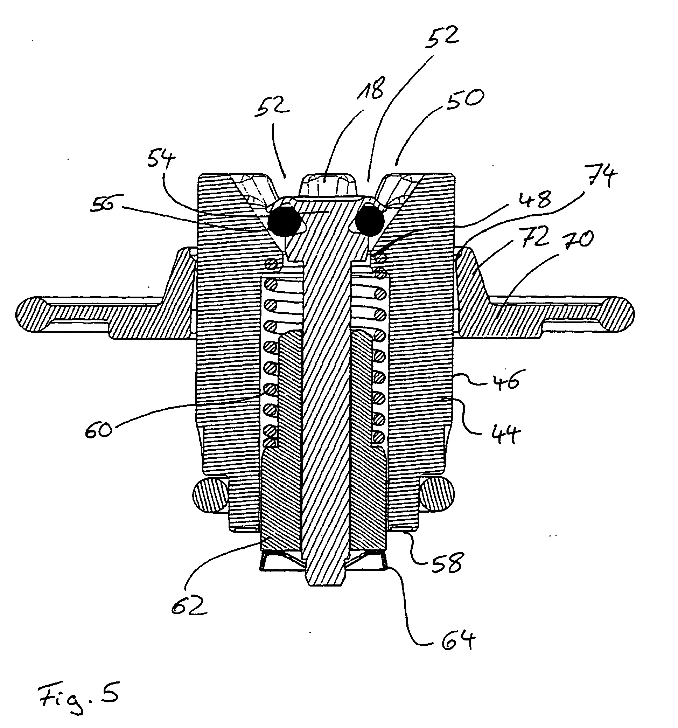

Der Fluiddruck in der Druckleitung 16 wirkt im Inneren der Hülse 44 auf den Kolben 54 in Richtung der Längsachse der Kolbenstange 55. Bei ausreichend hohem Fluiddruck in der Druckleitung 16 übersteigt die durch den Druck auf den Kolben 54 wirkende Kraft die Federkraft der Druckfeder 60, so dass der Kolben 54 mit der Kolbenstange 55 in Richtung der ersten Stirnseite 50 der Hülse 44 verschoben wird und der Kolben 54 mit dem O-Ring 56 von der konischen Innenwandung des Mischbereiches 18 abhebt, wie in den Figuren 2 und 5 gezeigt. So entsteht ein ringförmiger Spalt zwischen dem Kolben 54 bzw. dem O-Ring 56 und der umgebenden Innenwandung der Hülse 44 bzw. des Mischbereiches 18, durch welchen das Reduktionsmittel in den Mischbereich 18 einströmen kann.

Das zweite Rückschlagventil 36 der Vormischeinrichtung 39 wird durch eine ringförmige elastische Manschette 70 gebildet, welche zwischen der Zentralplatte 40 und der Stirnplatte 42 eingeklemmt ist. Dabei kommt insbesondere ein verdickter Bereich am Außenumfang der Manschette 70 sowohl an der Zentralplatte 40 als auch der Stirnplatte 42 zu Anlage, so dass die Druckluft aus der Druckluftleitung 28 nicht am Außenumfang der Manschette 70 vorbei strömen kann.

An ihrem Innenumfang ist die Manschette 70 zur Stirnseite 50 der Hülse 44 hin in axialer Richtung hülsenförmig verlängert, so dass ein Kragen 72 gebildet wird. Dieser Kragen 72 erstreckt sich leicht konisch geneigt zur Außenwandung 46 der Hülse 44 und kommt mit seinem freien Stirnende an dieser zur Anlage. Dabei ist die Manschette 70 bzw. der Kragen 72 derart elastisch ausgebildet, dass die Manschette in ihrer Ruhelage dichtend an der Außenwandung 46 der Hülse 44 gehalten wird, wie in den Figuren 2 und 3 gezeigt ist.

Wenn Druckluft in die Druckluftleitung 28 eingeleitet wird, umströmt die Druckluft in der Zentralplatte 40 zunächst am Außenumfang 46 die gesamte Hülse 44, da die die Hülse 44 aufnehmende Ausnehmung in der Zentralplatte 40 in dem der Druckleitung 16 abgewandten Bereich größer als der Außendurchmesser der Hülse 44 ausgebildet ist. Die Druckluft strömt dann in den Bereich zwischen dem Kragen 72 der Manschette 70 und der Außenwandung 46 der Hülse 44 ein, wobei durch den Luftdruck der Kragen 72 von der Außenwandung der Hülse 46 weggedrückt wird, so dass ein ringförmiger Spalt 74 zwischen der Außenwandung 46 und dem Innenumfang der Manschette 70 bzw. des Kragens 72 entsteht, durch welchen die Druckluft in die Ausnehmung 76 strömen kann, in welcher die Hülse 44 in der Stirnplatte 42 angeordnet ist. Von der Ausnehmung 46 strömt die Druckluft dann durch die Ausnehmungen bzw. Durchbrechungen 52 in den Mischbereich 18 und von dort gemeinsam mit dem zugeführten Reduktionsmittel durch die Leitung bzw. den Anschluss 22 weiter zu der Einspritzdüse im Abgassystem des Fahrzeuges.

Wenn die Druckluftzufuhr in der Druckluftleitung 28 abgeschaltet wird, legt sich die Manschette 70 mit ihrem Kragen 72 aufgrund ihrer Elastizität wieder dichtend an die Außenwandung 46 der Hülse 44 an. Aufgrund des in die Ausnehmung 76 ragenden Kragen 72 der Manschette 70 wird ferner erreicht, dass ein höherer Druck in der Ausnehmung 76 die hülsenförmige Verlängerung bzw. den Kragen 72 der Manschette 70 noch stärker gegen die Außenwandung 46 drückt und somit das Rückschlagventil 36 sicher verschließt.

Die Ausnehmungen bzw. Durchbrechungen 52 sind so ausgebildet, dass sie sich in Längsrichtung der Hülse 44 bis zur Außenseite des Kolbens 54 erstrecken. Ferner sind die Ausnehmungen 52 so geformt, dass sie sich zu dem Inneren der Hülse 44, d. h. zum Mischbereich 18 hin erweitern. Dadurch wird erreicht, dass die Druckluft, welche durch die Ausnehmungen 52 in den Mischbereich 18 einströmt, den gesamten Mischbereich 18 an seiner Innenwandung und insbesondere auch die Außenseite des Kolbens 54 vollständig überströmt, so dass Reduktionsmittelreste aus dem Mischbereich 18 vollständig ausgespült werden können.

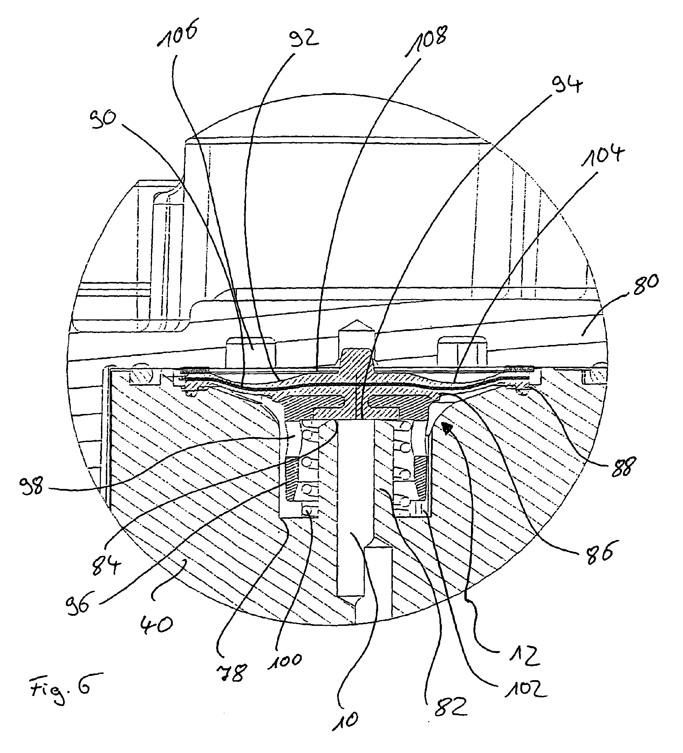

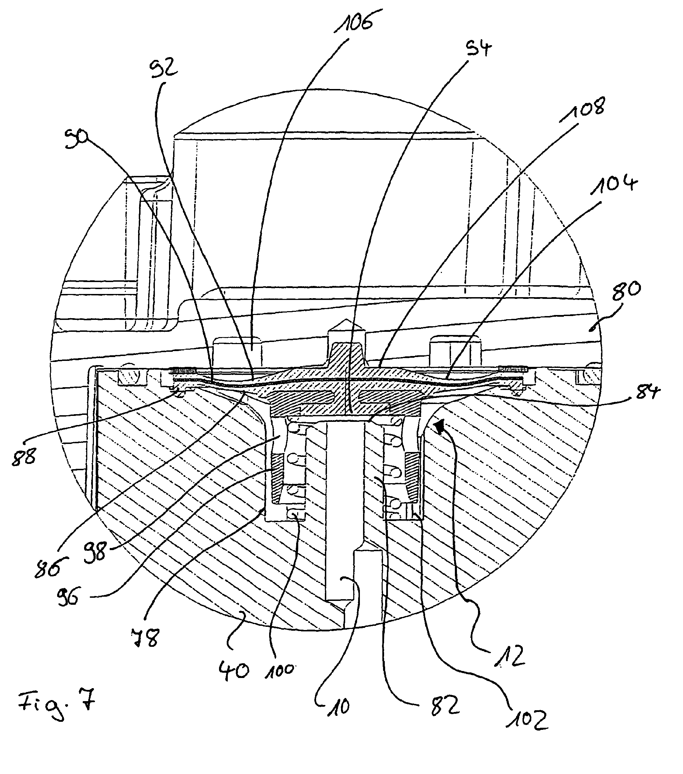

Anhand der Figuren 6 und 7 wird nachfolgend der Aufbau des Absperrventils 12 näher beschrieben. Das Absperrventil 12 ist in der Zentralplatte 40 in einer Ausnehmung 78 angeordnet. Die Ausnehmung 78 ist in der der Stirnplatte 42 abgewandten Oberfläche der Zentral platte 40 ausgebildet und wird durch die Frontplatte 80 eines Antriebsgehäuses des Dosierpumpenaggregates verschlossen, an welche die Zentralplatte 40 flächig angesetzt ist.

Die Ausnehmung 78 ist an ihrem Boden zylindrisch ausgebildet und öffnet sich zu der Frontplatte 80 hin trichterförmig. Zentral in dem zylindrischen Abschnitt erstreckt sich vom Boden der Ausnehmung 78 ein Einlassstutzen 82 in die Ausnehmung 78 hinein. Im Inneren des Einlassstutzens 82, d. h. konzentrisch zu diesem, verläuft die von der Druckleitung 8 abzweigende Rücklaufleitung 10 so, dass sie zu der Stirnseite des Einlassstutzens 82 geöffnet ist. Die dem Boden der Ausnehmung 78 abgewandte Stirnseite des Einlassstutzens 82 bildet so einen Ventilsitz 84. An welchem im geschlossenen Zustand, welcher in Fig. 6 gezeigt ist, ein membranförmig ausgestaltetes Ventilelement 86 dichtend anliegt. Das Ventilelement 86 ist als kreisförmige Membran ausgebildet, welche an ihrem Außenumfang 88 zwischen den aneinander angrenzenden Oberflächen der Zentralplatte 40 und der Frontplatte 80 gehalten wird. Der Zentralbereich der Ventilmembran 86 ist gegenüber dem Umfang 88 in der Erstreckungsrichtung des Einlassstutzens 82 bewegbar, was durch die Elastizität der Membran gewährleistet wird.

Die Ventilmembran bzw. das Ventilelement 86 weist einen Träger 90 auf, welcher von einem elastischen Material 92 umschlossen bzw. umspritzt ist, welches auch die an dem Ventilsitz 84 zur Anlage kommende Dichtfläche 94 definiert.

Die Dichtfläche 94 umgebend erstreckt sich von dem Ventilelement 86 ausgehend konzentrisch zu dem Einlassstutzen 82 eine Führungshülse 96, welche in ihrer Umfangswandung Durchbrechungen 98 aufweist. Die Führungshülse 96 ist integral mit dem elastischen Material 92 und über dieses mit dem Träger 90 des Ventilelementes 86 verbunden. Vorzugsweise sind der Träger 90 und die Führungshülse 96 mit dem elastischen Material 92 umspritzt und so formschlüssig miteinander verbunden.

Im Inneren der Führungshülse 96 ist eine Druckfeder 100 in Form einer Schraubenfeder angeordnet bzw. geführt, so dass die Druckfeder 100 sich parallel zur Längsachse des Einlassstutzens 82 zwischen dessen Außenumfang und dem Innenumfang der Führungshülse 96 erstreckt. Die Druckfeder 100 stützt sich mit einem Längsende am Boden der Ausnehmung 78 und mit dem entgegengesetzten Längsende an dem Ventilelement 86 am Umfang der Dichtfläche 94 ab. Die Druckfeder 100 ist so dimensioniert, dass sie das Ventilelement 96 in seine geöffnete, d. h. von dem Ventilsitz 84 beabstandete Position drückt, welche in Fig. 7 gezeigt ist. In dieser in Fig. 7 gezeichneten Stellung des Absperrventils 12 kann das Reduktionsmittel, welches von der Dosierpumpe in die Rücklaufleitung 10 gefördert wird durch den Einlassstutzen 82 und durch den ringförmigen Spalt zwischen der Dichtfläche 94 und dem Ventilsitz 84 in das Innere der Führungshülse 96 strömen. Durch die geöffnete, dem Ventilelement 86 abgewandte Stirnseite sowie die Durchbrechungen 98 der Führungshülse 96 kann das Reduktionsmittel in die Ausnehmung 78 einströmen. Von der Ausnehmung 78 strömt das Reduktionsmittel durch einen am Umfang der Ausnehmung 78 mündenden Kanal 102 zu einem Anschlussstutzen des Dosierpumpenaggregats und von dort weiter durch eine Rücklaufleitung zu dem Reduktionsmitteltank 4.

Um das Absperrventil 12 zu schließen wird das membranfrömige Ventilelement 86 von seiner dem Einlassstutzen 82 abgewandten Seite über die Betätigungsleitung 38 mit der Druckluft aus der Druckluftleitung 28 beaufschlagt. Der auf die Oberfläche 104 des Ventilelementes 86 wirkende Luftdruck bewegt das Ventilelement 86 gegen die Federkraft der Druckfeder 100 in Richtung der Längsachse des Einlassstutzens 82 auf diesen zu, so dass das Ventilelement 86 mit seiner Dichtfläche 84 an dem Ventilsitz 84 dichtend zur Anlage kommt. In diesem in Fig. 6 gezeigten Zustand kann kein Reduktionsmittel aus dem Einlassstutzen 82 in das Innere der Ausnehmung 78 strömen, so dass die Rücklaufleitung 10 durch das Absperrventil 12 verschlossen bzw. unterbrochen ist.

Die Betätigungsleitung 38, durch welche die Druckluft zur Beaufschlagung der Oberfläche 104 strömt, ist als Kanal im Inneren der Zentralplatte 40 ausgebildet, welcher zwischen der Zentralplatte 40 und der Frontplatte 80 im Bereich der Oberfläche 104 des Ventilelementes 86 mündet. Im gezeigten Beispiel ist dazu in der Frontplatte 80 ein dem Ventilelement 86 zugewandter offener Ringkanal 106 ausgebildet, in dem sich die Druckluft verteilen kann, so dass der Luftdruck gleichmäßig auf die gesamte Oberfläche 104 wirkt. Ferner ist die Oberfläche 104 derartig geschwungen ausgebildet, dass sie in einem an den Umfangsbereich 88 radial innenliegend angrenzenden ringförmigen Bereich beabstandet zu der Oberflächenebene der Zentralplatte 40 ausgebildet ist.

Der an der Oberfläche 104 der Dichtfläche 94 entgegengesetzte Zentralbereich 108 ist als Anschlagfläche ausgebildet, welche in geöffneten Zustand (siehe Fig. 7) des Absperrventils 12 an der Oberfläche der Frontplatte 80 zur Anlage kommt und somit den Weg des Ventilelementes 86 in der geöffneten Position begrenzt. Der Zentralbereich 108 weist zentrisch einen Vorsprung auf, welcher zur Führung des Ventilelementes in ein Loch in der Oberfläche der Frontplatte 80 eingreift.

### Bezugszeichenliste

- 2: - Dosierpumpe
- 4: - Reduktionsmitteltank
- 5: - Saugleitung
- 6: - Rückschlagventil
- 8: - Verzweigungspunkt
- 10: - Rücklaufleitung
- 12: - Absperrventil
- 14: - Drucksensor
- 16: - Druckleitung
- 18: - Mischbereich
- 20: - Rückschlagventil
- 22: - Leitung
- 24: - Druckluftversorgung
- 26: - Magnetventil
- 28: - Druckluftleitung
- 30: - Atmosphäre
- 32: - Druckregler
- 34: - Drossel
- 36: - Rückschlagventil
- 38: - Betätigungsleitung
- 39: - Vormischeinrichtung
- 40: - Zentralplatte
- 42: - Stirnplatte
- 44: - Hülse
- 46: - Außenwandung
- 48: - Einschnürung
- 50: - Stirnseite
- 52: - Ausnehmungen
- 54: - Kolben
- 55: - Kolbenstange
- 56: - O-Ring
- 58: - Stirnseite
- 60: - Druckfeder
- 62: - Führungshülse
- 64: - Federring
- 66: - Längsnuten
- 68: - O-Ring
- 70: - Manschette
- 72: - Kragen
- 74: - Spalt
- 76: - Ausnehmung
- 78: - Ausnehmung
- 80: - Frontplatte
- 82: - Einlassstutzen
- 84: - Ventilsitz
- 86: - Ventilelement
- 88: - Außenumfang des Ventilelements
- 90: - Träger
- 92: - elastisches Material
- 94: - Dichtfläche
- 96: - Führungshülse
- 98: - Durchbrechungen
- 100: - Druckfeder
- 102: - Kanal
- 104: - Oberfläche
- 106: - Ringkanal
- 108: - Zentralbereich
- D: - Grenze des Dosierpumpenaggregats

## Patentansprüche

1. Dosierpumpenaggregat zum Zumischen eines flüssigen Reduktionsmittels in einen Abgasstrom mit einer Dosierpumpe (2), welche eingangsseitig mit einem Anschluss zur Anbindung an einen Reduktionsmitteltank (4) verbunden ist und ausgangsseitig mit einer Druckleitung (16) sowie einer Rücklaufleitung (10) zu dem Reduktionsmitteltank (4) verbunden ist, **dadurch gekennzeichnet, dass**
in der Druckleitung (16) ein gegen den von der Dosierpumpe (2) erzeugten Fluiddruck vorgespanntes Rückschlagventil (20) angeordnet ist, die Rücklaufleitung (10) in Strömungsrichtung des Reduktionsmittels vor dem Rückschlagventil (20) mit der Druckleitung (16) verbunden ist, und in der Rücklaufleitung (10) ein erstes Absperrventil (12) zum wahlweisen Schließen der Rücklaufleitung (10) angeordnet ist, wobei die Vorspannkraft, welche das Rückschlagventil (20) geschlossen hält, größer als die bei geöffneter Rücklauf leitung (10) durch den Fluiddruck auf das Rückschlagventil (20) wirkende Kraft ist, und bei geschlossener Rücklaufleitung (10) die durch den Fluiddruck auf das Rückschlagventil (20) wirkende Kraft die Vorspannkraft des Rückschlagventils (20) übersteigt.

2. Dosierpumpenaggregat nach Anspruch 1, **dadurch gekennzeichnet, dass** eine Vormischeinrichtung (39) vorgesehen ist, in welcher das von der Dosierpumpe (2) geförderte Reduktionsmittel mit einem Druckgas gemischt wird.

3. Dosierpumpenaggregat nach Anspruch 2, **dadurch gekennzeichnet, dass** das Rückschlagventil (20) direkt an einer Mischkammer der Vormischeinrichtung (39) angeordnet ist.

4. Dosierpumpenaggregat nach einem der vorangehenden Ansprüche, **dadurch gekennzeichnet, dass** in Strömungsrichtung vor dem Rückschlagventil (20) und dem Absperrventil (12) in der Druckleitung (16) oder der Rücklaufleitung (10) ein den Fluiddruck erfassender Drucksensor (14) angeordnet ist.

5. Dosierpumpenaggregat nach Anspruch 4, **dadurch gekennzeichnet, dass** das erste Absperrventil (12) derart mit dem Drucksensor (14) gekoppelt ist, dass bei Erreichen eines vorbestimmten von dem Drucksensor (14) erfassten Fluiddruckes das erste Absperrventil in seine die Rücklaufleitung (10) schließende Stellung umgeschaltet wird.

6. Dosierpumpenaggregat nach einem der vorangehenden Ansprüche, **dadurch gekennzeichnet, dass** das erste Absperrventil (12) derart vorgespannt ist, dass es in Ruhelage in seiner die Rücklaufleitung (10) öffnenden Stellung gehalten wird.

7. Dosierpumpenaggregat nach Anspruch 2, **dadurch gekennzeichnet, dass** eingangsseitig in einer zu der Vormischeinrichtung (39) führenden Druckgasleitung (28) ein zweites Absperrventil (26) zur wahlweisen Unterbrechung der Druckgaszufuhr angeordnet ist.

8. Dosierpumpenaggregat nach Anspruch 7, **dadurch gekennzeichnet, dass** das erste Absperrventil (12) in der Rücklaufleitung (10) mit dem zweiten Absperrventil (26) in der Druckgasleitung (28) derart gekoppelt ist, dass bei geöffneter Druckgasleitung (28) die Rücklaufleitung (10) geschlossen ist.

9. Dosierpumpenaggregat nach Anspruch 8, **dadurch gekennzeichnet, dass** das erste Absperrventil (12) durch Druckgas betätigbar ist und die zur Vormischeinrichtung (39) führende Druckgasleitung (28) in Strömungsrichtung hinter dem zweiten Absperrventil (26) mit einem Betätigungsanschluss des ersten Absperrventils (12) verbunden ist.

10. Dosierpumpenaggregat nach Anspruch 9, **dadurch gekennzeichnet, dass** die zur Vormischeinrichtung (39) führende Druckgasleitung (28) in Strömungsrichtung vor einer Drosselstelle (34) mit einem Betätigungsanschluss des ersten Absperrventils (12) verbunden ist.

11. Dosierpumpenaggregat nach einem der Ansprüche 7 bis 10, **dadurch gekennzeichnet, dass** das zweite Absperrventil (26) derart mit einem in Strömungsrichtung vor dem Rückschlagventil (20) und dem ersten Absperrventil (12) in der Druckleitung (16) oder der Rücklaufleitung (10) angeordneten Drucksensor (14) gekoppelt ist, dass das zweite Absperrventil (26) bei Erreichen eines vorbestimmten von dem Drucksensor (14) erfassten Fluiddruckes in seine die Druckgasleitung (28) öffnende Stellung umgeschaltet wird.

12. Dosierpumpenaggregat nach einem der Ansprüche 7 bis 11, **dadurch gekennzeichnet, dass** das zweite Absperrventil (26) in der Druckgasleitung (28) derart vorgespannt ist, dass es in Ruhelage in seiner die Druckgasleitung (28) unterbrechenden Stellung gehalten wird.

13. Dosierpumpenaggregat nach einem der Ansprüche 7 bis 12, **dadurch gekennzeichnet, dass** in der Vormischeinrichtung (39) ausgangsseitig der Druckgaszufuhr ein Rückschlagventil (35) angeordnet ist.

## Claims

1. A metering or dosing pump assembly for admixing a fluid reduction agent into an exhaust gas flow, with a metering pump (2) which on the entry side is connected to a connection for connecting to a reduction agent tank (4), and at the exit side is connected to a pressure conduit (16) as well as a return conduit (10) to the reduction agent tank (4), **characterised in that**
a return valve (20) biased against the fluid pressure produced by the metering pump (2), is arranged in the pressure conduit (16), the return conduit (10) is connected to the pressure conduit (16) in front of the return valve (20) in the flow direction of the reduction agent, and a first shut-off valve (12) for the selective closing of the return conduit (10), is arranged in the return conduit (10), wherein the biasing force which keeps the return valve (20) closed, is larger than the force acting on the return valve (20) by way of the fluid pressure given an opened return conduit (20), and with a closed return conduit (20), the force acting on the return valve (20) by way of the fluid pressure exceeds the biasing force of the return valve (20).

2. A metering pump assembly according to claim 1, **characterised in that** a premixing device (39) is provided, in which the reduction agent delivered by the metering pump (2) is mixed with a compressed gas.

3. A metering pump assembly according to claim 2, **characterised in that** the return valve (20) is arranged directly on a mixing chamber of the premixing device (39).

4. A metering pump assembly according to one of the preceding claims, **characterised in that** a pressure sensor (14) detecting the fluid pressure is arranged in the pressure conduit (16) or the return conduit (10), in front of the return valve (20) and the shut-off valve (12) in the flow direction.

5. A metering pump assembly according to claim 4, **characterised in that** the first shut-off valve (12) is coupled to the pressure sensor (14) in a manner such that on reaching a predefined fluid pressure detected by the pressure sensor (14), the first shut-off valve is switched over into its position closing the return conduit (10).

6. A metering pump assembly according to one of the preceding claims, **characterised in that** the first shut-off valve (12) is biased in a manner such that in its idle position, it is held in its position opening the return conduit (10).

7. A metering pump assembly according to claim 2, **characterised in that** a second shut-off valve (26) for the selective interruption of the compressed gas supply, is arranged on the entry side in a compressed gas conduit (28) leading to the premixing device (39).

8. A metering pump assembly according to claim 7, **characterised in that** the first shut-off valve (12) in the return conduit (10) is coupled to the second shut-off valve (26) in the compressed gas conduit (28), in manner such that the return conduit (10) is closed given an opened compressed gas conduit (28).

9. A metering pump assembly according to claim 8, **characterised in that** the first shut-off valve (12) may be actuated by pressurized gas, and the compressed gas conduit (28) leading to the premixing device (39), is connected to an actuation connection of the first shut-off valve (12), behind the second shut-off valve (26) in the flow direction.

10. A metering pump assembly according to claim 9, **characterised in that** the compressed gas conduit (28) leading to the premixing device (39) is connected to an actuation connection of the first shut-off valve (12), in front of a throttle location (34) in the flow direction.

11. A metering pump assembly according to one of the claims 7 to 10, **characterised in that** the second shut-off valve (26) is coupled to a pressure sensor (14) arranged in front of the return valve (20) and the first shut-off valve (12) in the flow direction, in the pressure conduit (16) or the return conduit (10), in a manner such that the second shut-off valve (26) is switched over into its position opening the compressed gas conduit (28) on reaching a predefined fluid pressure detected by the pressure sensor (14)

12. A metering pump assembly according to one of the claims 7 to 11, **characterised in that** the second shut-off valve (26) in the compressed gas conduit (28) is biased in a manner such that in the idle position, it is held in its position interrupting the compressed gas conduit (28).

13. A metering pump assembly according to one of the claims 7 to 12, **characterised in that** a return valve (35) is arranged in the premixing device (39) on the exit side of the compressed gas supply.

## Revendications

1. Unité de pompe de dosage servant à mélanger un agent de réduction liquide dans un flux de gaz d'échappement avec une pompe de dosage (2) qui, côté entrée, communique avec un élément de raccord destiné à être raccordé à un réservoir d'agent de réduction (4) et, côté sortie, communique avec une conduite de refoulement (16) et une conduite de retour (10) vers le réservoir d'agent de réduction (4), **caractérisée en ce qu'**une soupape antiretour (20) précontrainte de façon à s'opposer à la pression de fluide produite par la pompe de dosage (2) est disposée dans la conduite de refoulement (16), **en ce que** la conduite de retour (10) est raccordée à la conduite de refoulement (16) en amont de la soupape antiretour (20) dans le sens d'écoulement de l'agent de réduction, et **en ce qu'**une première soupape d'arrêt (12) servant à fermer de manière sélective la conduite de retour (10) est placée dans la conduite de retour (10), l'effort de précontrainte qui maintient la soupape antiretour (20) fermée étant supérieur à la force agissant sur la soupape antiretour (20) sous l'effet de la pression de fluide lorsque la conduite de retour (10) est ouverte, et, lorsque la conduite de retour (10) est fermée, la force agissant sur la soupape antiretour (20) sous l'effet de la pression de fluide dépassant l'effort de précontrainte de la soupape antiretour (20).

2. Unité de pompe de dosage selon la revendication 1, **caractérisée en ce qu'**il est prévu un dispositif de prémélange (39) dans lequel l'agent de réduction délivré par la pompe de dosage (2) est mélangé avec un gaz sous pression.

3. Unité de pompe de dosage selon la revendication 2 **caractérisée en ce que** la soupape antiretour (20) est disposée directement sur une chambre de mélange du dispositif de prémélange (39).

4. Unité de pompe de dosage selon l'une des revendications précédentes, **caractérisée en ce qu'**un capteur de pression (14) enregistrant la pression de fluide est disposé dans la conduite de refoulement (16) ou la conduite de retour (10), en amont de la soupape antiretour (20) et de la soupape d'arrêt (12) dans le sens d'écoulement.

5. Unité de pompe de dosage selon la revendication 4, **caractérisée en ce que** la première soupape d'arrêt (12) est couplée au capteur de pression (14) de telle sorte que, lorsqu'une pression de fluide prédéterminée enregistrée par le capteur de pression (14) est atteinte, la première soupape d'arrêt est commutée dans sa position de fermeture de la conduite de retour (10).

6. Unité de pompe de dosage selon l'une des revendications précédentes, **caractérisée en ce que** la première soupape d'arrêt (12) est précontrainte de telle sorte qu'en position de repos, elle est maintenue dans sa position d'ouverture de la conduite de retour (10).

7. Unité de pompe de dosage selon la revendication 2, **caractérisée en ce que**, côté entrée est disposée, dans une conduite de gaz sous pression (28) menant au dispositif de prémélange (39), une deuxième soupape d'arrêt (26) pour la coupure sélective de l'alimentation en gaz sous pression.

8. Unité de pompe de dosage selon la revendication 7, **caractérisée en ce que** la première soupape d'arrêt (12) dans la conduite de retour (10) est couplée avec la deuxième soupape d'arrêt (26) dans la conduite de gaz sous pression (28) de telle sorte que, lorsque la conduite de gaz sous pression (28) est ouverte, la conduite de retour (10) est fermée.

9. Unité de pompe de dosage selon la revendication 8, **caractérisée en ce que** la première soupape d'arrêt (12) peut être actionnée par du gaz sous pression et que la conduite de gaz sous pression (28) menant au dispositif de prémélange (39) est raccordée à un raccord d'actionnement de la première soupape d'arrêt (12) en aval de la deuxième soupape d'arrêt (26) dans le sens d'écoulement.

10. Unité de pompe de dosage selon la revendication 9, **caractérisée en ce que** la conduite de gaz sous pression (28) menant au dispositif de prémélange (39) est raccordée à un raccord d'actionnement de la première soupape d'arrêt (12), en amont d'un point d'étranglement (34) dans le sens d'écoulement.

11. Unité de pompe de dosage selon l'une des revendications 7 à 10, **caractérisée en ce que** la deuxième soupape d'arrêt (26) est couplée à un capteur de pression (14) disposé, dans le sens d'écoulement, en amont de la soupape antiretour (20) et de la première soupape d'arrêt (12) dans la conduite de refoulement (16) ou la conduite de retour (10) de telle sorte que la deuxième soupape d'arrêt (26) est commutée dans sa position d'ouverture de la conduite de gaz sous pression (28) lorsqu'une pression de fluide prédéterminée, enregistrée par le capteur de pression (14), est atteinte.

12. Unité de pompe de dosage selon l'une des revendications 7 à 11, **caractérisée en ce que** la deuxième soupape d'arrêt (26) est précontrainte dans la conduite de gaz sous pression (28) de telle sorte qu'en position de repos, elle est maintenue dans sa position de coupure de la conduite de gaz sous pression (28).

13. Unité de pompe de dosage selon l'une des revendications 7 à 12, **caractérisée en ce qu'**une soupape antiretour (35) est disposée dans le dispositif de prémélange (39), côté sortie de la conduite d'alimentation en gaz sous pression.
